# EUROPEAN PATENT APPLICATION

(11) **EP 2 357 776 A2**
(43) Date of publication of application: **17.08.2011**
(21) Application number: 11151928.6
(22) Date of filing: 25.01.2011
(51) Int. Cl.: H04M 1/725, G06F 3/048

(54) **Apparatus and method for displaying a lock screen of a terminal equipped with a touch screen**

(30) Priority: 04.02.2010 KR 20100010551
(71) Applicant: SAMSUNG ELECTRONICS CO., LTD., Suwon-si Gyeonggi-do 442-742 (KR)
(72) Inventor: Ahn, Hee-Bum, 442-742, Gyeonggi-do (KR); Oh, Sang-Wook, 442-742, Gyeonggi-do (KR); Kim, Hyun-Soo, 442-742, Gyeonggi-do (KR); Hwang, Seong-Taek, 442-742, Gyeonggi-do (KR); Kwon, Mu-Sik, 442-742, Gyeonggi-do (KR); Lee, Dong-Hyuk, 442-742, Gyeonggi-do (KR); Park, An-Na, 442-742, Gyeonggi-do (KR)
(74) Representative: Grünecker, Kinkeldey, Stockmair & Schwanhäusser Anwaltssozietät

(57) **Abstract**

An apparatus and method for displaying a lock screen including a character object having a motion effect in a terminal equipped with a touch screen. The method includes locking the touch screen and displaying the lock screen including the character object having the motion effect on a preset background image. Upon generation of a touch input, determining whether the touch input is for unlocking the touch screen, and if the touch input is for unlocking the touch screen, unlocking the touch screen and controlling the character object to perform a preset action indicating the unlocking of the touch screen.

## Description

### BACKGROUND OF THE INVENTION

### 1. Field of the Invention

The present invention relates generally to a terminal using a touch screen as an input/output unit, and more particularly, to an apparatus and a method for displaying a lock screen of a terminal.

### 2. Description of the Related Art

A touch screen is commonly used as an input/output device for a portable device such as a smart phone, a cellular phone, a Portable Multimedia Player (PMP), or an MP3 player. The touch screen displays output content and also receives touch inputs by touching the surface thereof. The touch screen is advantageous is saving space and providing a convenient user interface with easy-to-use and intuitive input.

However, a device that uses a touch screen as an input/output unit often receives unintentional touch inputs. For example, when a device equipped with a touch screen is placed in a pocket or a bag, the touch screen may react to contact from another object in the pocket or the bag, resulting in the generation of an unintentional touch input.

To prevent this problem, most devices having touch screens also provide a screen lock function. The screen lock function is normally executed when a particular key for screen locking is input or a touch input is not generated for a predetermined time. Currently, in a screen lock function of most portable devices having touch screens, a screen is simply turned off or a preset image is displayed.

### SUMMARY OF THE INVENTION

An aspect of the present invention is to provide an apparatus and a method for displaying a lock screen having various effects generated by using a moving character object in a background screen of a terminal equipped with a touch screen, wherein the lock screen is unlocked by motion of the character object.

In accordance with an aspect of the present invention, a method is provided for displaying a lock screen including a character object having a motion effect in a terminal equipped with a touch screen. The method includes locking the touch screen, displaying the lock screen including the character object having the motion effect on a preset background image, receiving a touch input on the lock screen, identifying the touch input as a touch input for unlocking the touch screen, unlocking the touch screen, and performing, by the character object, a preset action indicating the unlocking of the touch screen.

In accordance with another aspect of the present invention, an apparatus is provided for displaying a lock screen including a character object having a motion effect in a terminal including a touch screen. The apparatus includes an input unit for receiving a user input via the touch screen, an output unit for outputting display content including the lock screen, a storing unit for storing a background image and information of the character object, and a controller for running the lock screen to lock the touch screen, displaying the character object having the motion effect on the preset background image, identifying the touch input as a touch input for unlocking the touch screen, unlocking the touch screen, and controlling the character object to perform a preset action indicating the unlocking of the touch screen.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1A is a block diagram illustrating a terminal according to an embodiment of the present invention;
FIG. 1B is a block diagram illustrating a lock screen processor according to an embodiment of the present invention;
FIG. 2 is a diagram illustrating a screen including a character object according to an embodiment of the present invention;
FIG. 3 is a diagram illustrating a reaction of a character object with respect to a user touch input in a screen including the character object according to an embodiment of the present invention;
FIG. 4 is a diagram illustrating an example of a lock screen of a terminal including a character object according to an embodiment of the present invention; and
FIG. 5 is a flowchart illustrating a touch screen unlocking operation of a terminal according to an embodiment of the present invention.

### DETAILED DESCRIPTION OF EMBODIMENTS OF THE INVENTION

Hereinafter, various embodiments of the present invention will be described in detail with reference to the accompanying drawings. In the following description, details such as components are provided, but they are provided to assist a comprehensive understanding of the present invention. Accordingly, those of ordinary skill in the art will recognize that various changes and modifications of the details can be made without departing from the scope of the present invention. In the following description, a detailed description of well-known techniques related to the present invention will not be provided if it unnecessarily obscures the subject matter of the present invention.

In accordance with an embodiment of the present invention, a method is provided for generating an image using a character object that reacts to a user touch input and automatically moves on a background screen in a terminal equipped with a touch screen, and a method is provided for displaying the generated image as a lock screen for the touch screen and an indicator of unlocking the touch screen.

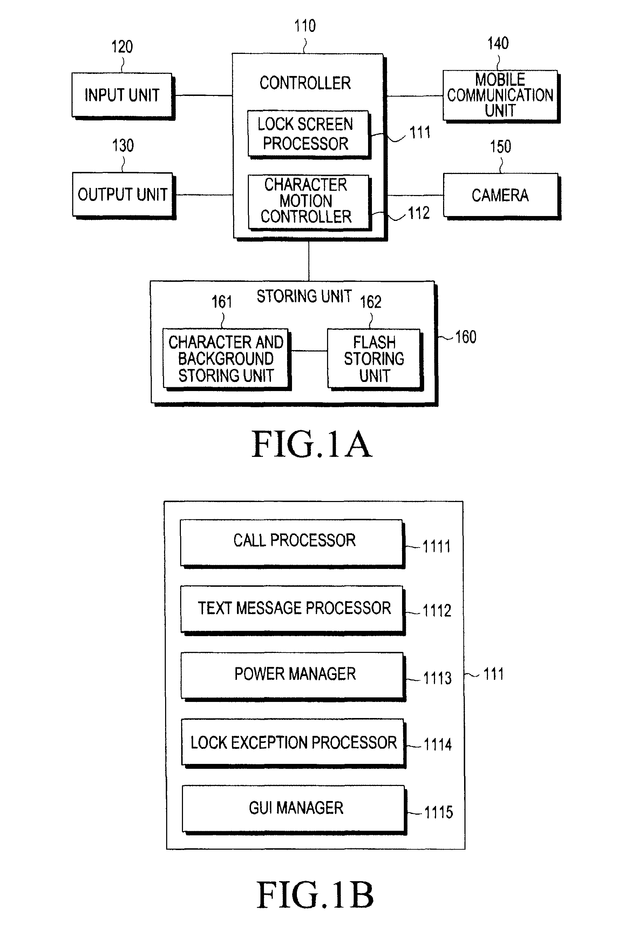

FIG 1A is a block diagram illustrating a terminal according to an embodiment of the present invention.

Referring to FIG. 1A, the terminal includes an input unit 120 for receiving user input, an output unit 130 for outputting content to be displayed, a storing unit 160 for storing information necessary for operations of the terminal, a mobile communication unit 140 for performing communication over a mobile communication network, a camera unit 150 for photographing an object or video recording, and a controller 110 for controlling the components of the terminal.

In accordance with an embodiment of the present invention, the input unit 120 and the output unit 130 may be implemented as a single touch screen, which operates as both the input unit 120 and the output unit 130.

The storing unit 160 includes a character and background storing unit 161 for storing information about a plurality of images to be used as a background of a lock screen and information about a plurality of characters to be displayed on the lock screen, and a flash storing unit 162 for storing data generated when a background screen including a character having a motion effect is generated as a file, e.g., in a flash format.

In accordance with an embodiment of the present invention, the controller 110 includes a character motion controller 112 for controlling motion of a character according to action information for the character, when a character object is expressed in a background image displayed on a lock screen or a particular screen, and a lock screen processor 111 for processing an event while displaying the lock screen. The character motion controller 112 controls the motion of the character in the background by referring to character information stored in the character and background storing unit 161.

FIG. 1B is a block diagram illustrating a lock screen processor according to an embodiment of the present invention.

Referring to FIG. 1B, the lock screen processor 111 includes a call processor 1111 for processing an operation, when a call is received in a lock screen state, a text message processor 1112 for processing text message reception, when a text message is received in the lock screen state, a power manager 1113 for managing power of the terminal in the lock screen state, a lock exception processor 1114 for processing an exceptional case for generation of a particular input or occurrence of a particular event in the lock screen state, and a Graphic Usher Interface (GUI) manager 1115 for managing a UI in the lock screen state.

According to an embodiment of the present invention, components included in the lock screen processor 111 may have information about whether a character does an action upon occurrence of a situation such as reception of a call or a text message, when a background image where the character is displayed is set as a lock screen. For example, when a call or a text message is received during display of a lock screen where a character object is displayed, information about whether the displayed character object does an action or whether display of the lock screen is changed may be stored in the call processor 1111 or the text message processor 1112.

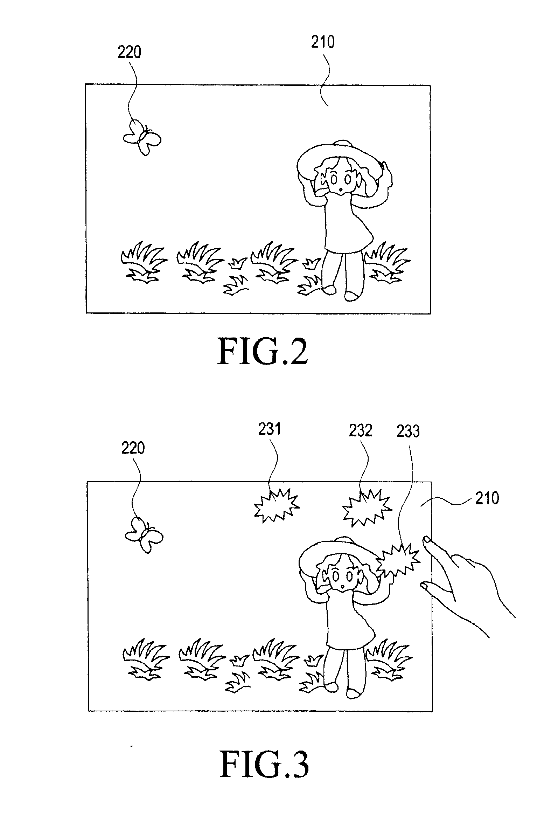

FIG. 2 is a diagram illustrating a screen including a character object according to an embodiment of the present invention. As described above, a particular character object is displayed on a background screen or an image, e.g., a photograph captured by the camera unit 150. Additionally, the displayed character will perform an action in the background image according to feature information of the character object. FIG. 2 illustrates a screen in which a butterfly character object 220 is displayed on a background image (or screen) 210.

The character object displayed on the background screen may be selected by a user, but the controller 110 may analyze a feature of the background image and select a proper character object from among available character objects for recommendation to the user.

The controller 110, when analyzing the feature of the background image, extracts edge information of the background image, divides the background image into several regions according to the extracted edge information, and classifies the divided regions. The classification may include previously storing features (edge information, color information, etc.) corresponding to types of a plurality of regions in the character and background storing unit 161, and determining a type of the current region by matching a feature of the current region to the previously stored features.

The controller 110 may automatically determine a character to which a motion effect is to be applied in the background image according to the extracted feature of the background image. Accordingly, when a character is predefined for a type of a region of the background image, the controller 1110 may determine the predefined character as a character to which a motion effect is to be applied. For example, when "ocean" is stored as one of types of regions of the background image in the character and background storing unit 161, and a fish object is preset as a character object related to the ocean, the controller 110 determines to display the preset fish object on the background screen, if the type of the region of the background image is determined as corresponding to "ocean".

The character and background storing unit 161 stores information for classifying each background image and information about each character. Specifically, character and background storing unit 161 stores, for each character, information necessary for an action of the character, such as information defining usual motion of the character (or usual motion information), information defining events to which the character reacts, and information defining motion of the character after occurrence of the events to which the character reacts. The events to which the character reacts may include a service event such as message reception, call reception, weather, alarm, specific time, etc., and a character action event such as an acceleration signal generated by a sensor unit, a touch input signal, collision of the character with another object, collision of the character with a set position, approach to another object, approach to a set position, collision of the character between another character, etc. Among these events, the events to which the character reacts are set and an action of the character, upon occurrence of each of the set events, may be set for each of the set events.

The action of the character may be set variously from basic motions such as motion, stop, following along a boundary line, generation of an arbitrary position, short appearance and disappearance, transparency effect motion, and following of input coordinates to display of a particular animation effect using an image preset for a feature of each character object.

When a character object is displayed on an background image according to the above-described character information, the character object may do an action such that it makes a first motion according to the usual motion information, makes a second motion upon reception of a text message, and makes a third motion upon occurrence of a preset alarm.

The character information may be edited and generated directly by the user. For example, the user may set usual motion of a character object, an event to which the character object reacts, and an action of the character object upon occurrence of the event by using an image captured by the user, thereby generating a character.

When a character object is displayed on a background image, calculation for determining motion of the character object is performed by applying a random function for exceptional situations such as a boundary and a color, and thus, the image in which the character object is displayed according to an embodiment of the present invention can provide different character motion effects to the user at all times.

FIG. 3 is a diagram illustrating a reaction of a character object with respect to a user touch input in a screen including the character object according to an embodiment of the present invention. As described above, upon input of an external signal such as a user touch input, when a character object is displayed and makes motion on a background screen, the displayed character object may react to the input external signal.

Referring to FIG. 3, when the user sequentially makes touch inputs at particular positions 231, 232, and 233 on the background screen 210, the butterfly character object 220 does an action such that it moves to the touch-input positions 231, 232, and 233 sequentially in an order the touch inputs are made. Accordingly, in accordance with an embodiment of the present invention, the user may set a moving path of the character object displayed on the background image and add a graphic effect to play a simple game.

For example, when a plurality of character objects are displayed on a single background screen, motion of one selected from among the character objects may be adjusted by a user touch input and when the selected character object collides with another one of the character objects, an image may be displayed where the selected character object eats the colliding character object, thereby implementing a game.

An image that is set such that a specific character object automatically moves on a background image according to an embodiment of the present invention may be generated, stored, and output by execution of a particular application in the terminal. For example, the background image in which character objects are expressed and the character objects may be stored as data in a flash format in the flash storing unit 162.

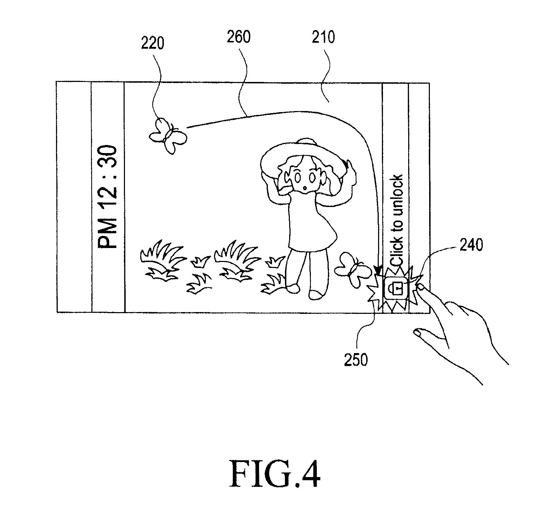

FIG. 4 is a diagram illustrating a lock screen of a terminal including a character object according to an embodiment of the present invention.

Referring to FIG. 4, an image in which character objects having the above-described motion effect is displayed as a background of a lock screen of a terminal equipped with a touch screen. In this case, when the user enters a touch input on a touch unlock button to unlock a lock screen, a character object may do an action as if it unlocks the lock screen. For example, when the butterfly character object 220 is displayed as illustrated in FIG. 4, upon generation of a touch input 250 on a touch unlock button 240 to unlock the lock screen, the butterfly character object 220 may fly to and sit on the user touch input position, i.e., the touch unlock button 240.

In addition, when an image, such as a lock image, indicating the lock screen exists on the lock screen, the character object may do an action such as unlocking or releasing the image. Further, various character objects may make various motions which the user can easily recognize, for example, the rising action of a fish, the flying-up action of a bird, the firing action of a gun or a cannon, a kissing action, etc.

According to an embodiment of the present invention, when a character object is displayed on a background screen, upon recognition of a particular external signal, the motion of the character object may be affected by the external signal. For example, the external signal may be a touch input onto the lock screen, a signal input from a gravity sensor, an acceleration sensor, an ambient light sensor, a microphone, or a camera, or a signal generated by weather information, time information, message reception, or e-mail reception. Accordingly, upon reception of a message when the character object is displayed that makes motion on the background screen in a lock screen state, the character object may perform an action indicating the message reception.

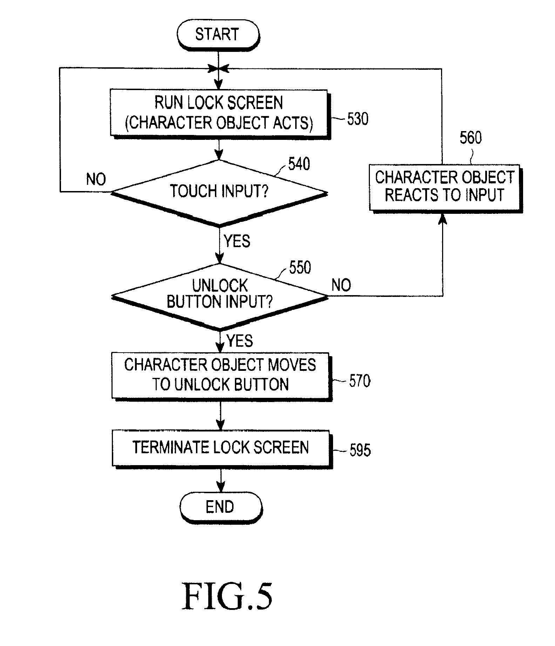

FIG. 5 is a flowchart illustrating a touch screen unlocking operation of a terminal according to an embodiment of the present invention.

Referring to FIG. 5, when a touch screen lock function is executed, locking a touch screen, a lock screen is run in step 530. As described above, a touch screen lock function is normally executed when a particular input for locking the touch screen is input or a touch input is not generated for a predetermined time.

As described above, during the running of the lock screen, a character object is displayed on a background image, and the character object will perform an action, for example, moving in the background image, according to a feature of the character object.

In step 540, the terminal determines whether a touch input is generated via the locked touch screen. If it is determined that a touch input is not generated in step 540, the terminal continues to run the lock screen in step 530. However, when a touch input is generated in step 540, the terminal determines whether the touch input is a lock release for unlocking the touch screen in step 550.

When the touch input is not the lock release in step 550, the terminal controls the character object to react reacts to the touch input according to a feature included in character information, and then continues to run the lock screen in step 530. However, when the touch input is the lock release in step 550, the terminal unlocks the touch screen and controls the character object to perform a preset action indicating the unlocking of the touch screen, such as moving the object to an unlock button for inputting the lock release.

While the character object described above indicates the unlocking of the touch screen by moving to the unlock button, this is only an example of a preset action for the character object to perform, and may change according to a value being set in character information stored in the character and background storing unit 161.

After the character object performs the preset action indicating the unlocking of the touch screen, running of the lock screen is terminated in step 595.

Accordingly, the above-described embodiments of the present invention provide a touch screen input lock screen using a character object that moves in a background of a terminal equipped with a touch screen. In addition, the character object may be set by a user or automatically set according to a background image, and a screen may be configured such that the character object reacts to a user touch input. Moreover, the character object may perform a particular action, such as move to a touch position, upon the unlocking of the touch screen, thereby providing a visually pleasing UI to a user.

While the present invention has been shown and described with reference to certain embodiments thereof, it will be understood by those skilled in the art that various changes in form and details may be made therein without departing from the spirit and scope of the present invention as defined by the appended claims and their equivalents.

## Claims

1. A method for displaying a lock screen including a character object having a motion effect in a terminal equipped with a touch screen, the method comprising:
locking the touch screen;
displaying the lock screen including the character object having the motion effect on a preset background image;
receiving a touch input onto the lock screen via the touch screen;
determining whether the touch input for unlocking the touch screen; and
if the touch input is for unlocking the touch screen, unlocking the touch screen and controlling the character object to perform a preset action indicating the unlocking of the touch screen.

2. The method of claim 1, wherein controlling the character object to perform the preset action indicating the unlocking of the touch screen comprises controlling the character object to move to an unlock button in which the touch input is received.

3. The method of claim 1, further comprising:
identifying an occurrence of an event in the terminal to which the character object reacts; and
controlling the character object to perform an action corresponding to the event.

4. The method of claim 3, wherein the event to which the character object reacts includes at least one of:
a message reception;
a call reception;
a particular weather event;
an alarm time;
a particular time;
a touch input signal;
a collision between the character object and another displayed object;
a collision of the character object with a set position;
an approach to another object;
an approach to a set position; and
a collision of the character object with another character, and
wherein the action corresponding to the event includes at least one of:
motion;
stopping motion;
following a boundary line;
generation of an arbitrary position;
short appearance and disappearance;
transparency effect motion;
following input coordinates; and
an animation effect.

5. The method of claim 1, wherein displaying the character object having the motion effect on the preset background image comprises:
extracting a feature of the background image;
determining the character object to be displayed on the background image according to the extracted feature of the background image;
determining a motion of the character object according to the feature of the background image and a recognized external signal; and
executing the motion of the character object on the background image.

6. The method of claim 5, wherein extracting the feature of the background image comprises:
extracting edge information of the background image;
dividing the background image into several regions according to the extracted edge information; and
classifying the divided regions.

7. The method of claim 6, wherein classifying the divided regions comprises comparing features previously stored to correspond to types of a plurality of regions with a feature of a current region to determine a type of the current region.

8. The method of claim 5, wherein determining the character object to be displayed on the background image according to the extracted feature of the background image comprises:
identifying a character that is predefined for a type of a region included in the background image; and
selecting the character that is predefined for the type of the region as the character object to be displayed on the background image.

9. A terminal for displaying a lock screen including a character object having a motion effect, the terminal comprising:
an input unit for receiving a user input via a touch screen;
an output unit for outputting display content;
a storing unit for storing a background image and information of the character object; and
a controller for locking the touch screen, displaying a lock screen including the character object having the motion effect on the background image, determining whether the user input is for unlocking the touch screen, and when the user input is for unlocking the touch screen, unlocking the touch screen and controlling the character object to perform a preset action indicating the unlocking of the touch screen.

10. The terminal of claim 9, wherein the controller controls the character object to move to an unlock button with which the user input is received, if the touch input is for unlocking the touch screen.

11. The terminal of claim 9, wherein upon occurrence of an event to which the character object reacts, the controller controls the character object to perform an action corresponding to the event.

12. The terminal of claim 11, wherein the event to which the character object reacts comprises at least one of:
a message reception;
a call reception;
a particular weather event;
an alarm time;
a particular time;
a touch input signal;
a collision between the character object and another displayed object;
a collision of the character object with a set position;
an approach to another object;
an approach to a set position; and
a collision of the character object with another character
, and
wherein the action corresponding to the event comprises at least one of:
motion;
stopping motion;
following a boundary line;
generation of an arbitrary position;
short appearance and disappearance;
transparency effect motion;
following input coordinates; and
an animation effect.

13. The terminal of claim 9, wherein to display the character object having the motion effect on the preset background image, the controller extracts a feature of the background image, determines the character object to be displayed on the background image according to the extracted feature of the background image, determines a motion of the character object according to the feature of the background image and a recognized external signal, and executes the motion of the character object on the background image.

14. The terminal of claim 13, wherein to extract the feature of the background image, the controller extracts edge information of the background image, divides the background image into several regions according to the extracted edge information, and classifies the divided regions.

15. The terminal of claim 14, wherein to classify the divided regions, the controller compares features previously stored to correspond to types of a plurality of regions with a feature of a current region to determining a type of the current region.
